Europäisches Patentamt

European Patent Office

Office européen des brevets

(19)

(11) **EP 1 238 875 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
*B60S 9/12* (2006.01)          *B66C 23/80* (2006.01)

(21) Anmeldenummer: **01111028.5**

(22) Anmeldetag: **08.05.2001**

(54) **Hubstütze**

Outrigger

Pied de sustention

(84) Benannte Vertragsstaaten:
**AT BE CH CY DE DK ES FI FR GB GR IE IT LI LU MC NL PT SE TR**

(30) Priorität: **09.03.2001 DE 20104087 U**

(43) Veröffentlichungstag der Anmeldung:
**11.09.2002 Patentblatt 2002/37**

(73) Patentinhaber: **Goldschmitt techmobil GmbH
74746 Höpfingen (DE)**

(72) Erfinder: **Mairon, Markus, Dipl.-Ing.
74746 Höpfingen (DE)**

(74) Vertreter: **Pöhner, Wilfried Anton, Dr.
Patentanwalt
Postfach 6323
97070 Würzburg (DE)**

(56) Entgegenhaltungen:
**US-A- 2 837 312          US-A- 4 865 295**

EP 1 238 875 B1

**Beschreibung**

Die Erfindung betrifft eine Hubstütze mit einem Hydraulikzylinder mit beidseitig beaufschlagbarem Kolben, einer aus dem Zylinder herausführenden Kolbenstange, einer Halterung wobei der Hydraulikzylinder an seinem oberen Ende ein vorzugsweise außeraxial gelegenes Drehlager aufweist und am Drehlager schwenkbar an der Halterung befestigt ist wenigstens eine Schubstange vorgesehen ist, deren oberes Ende schwenkbar an der Halterung befestigt ist, deren unterer Bereich in einem am Zylinder befestigten Dreh-Schiebe-Lager festgelegt ist, und die Festlegungspunkte von Hydraulikzylinder und Schubstange an der Halterung von einander verschieden sind, und das freie Ende der Kolbenstange einen Teller aufweist, der gegen das untere Ende der Schubstange preßbar ist.

Derartige Stützen werden beispielsweise an Kraftfahrzeugen, Hebebühnen, Wechselpritschen, Wohnwagen oder Wohnmobilen eingesetzt. Sie dienen dazu, während des Ruhezustandes das Fahrzeug abzustützen, das Fahrwerk zu entlasten oder das Fahrzeug gänzlich zu tragen.

Je nach aufzunehmender Last werden mechanisch oder hydraulisch wirkende Hubstützen eingesetzt. Bei Fahrzeugen mit schwerem Aufbau, beispielsweise Autokränen; Betonmischern oder Hebebühnen, kommen ausschließlich hydraulisch angetriebene Stützen zur Anwendung. Stützen dieser Art erfordern zur Durchführung der vorgesehenen Bewegungen meist mehrere ein- oder zweiseitig beaufschlagbare Hydraulikzylinder und weisen daher in der Regel eine aufwendige und kostspielige Bauweise auf.

Bei Fahrzeugen mit leichterem Aufbau sind häufig einfache Hubstützen mit rein mechanischen Arbeitsprinzip vorgesehen. Diese beispielsweise bei Wechselpritschen, Campingwagen oder Wohnmobilen eingesetzten Ausführungsformen nach dem Stand der Technik sind als Schere, oder als klappbare Zahn- oder Gewindestange ausgebildet. Bei der erstgenannten Stütze wird das Ein- und Ausfahren und das Heben des Fahrzeugs durch ein und denselben Vorgang durchgeführt, einfach dadurch, daß mittels einer Kurbel die Schere weiter auf- oder zugedreht wird. Bei klappbaren Zahn- oder Gewindestange sind das Ein-und Ausklappen und das Anheben zwei getrennte Vorgänge, die nacheinander manuell durchgeführt werden. Rein mechanische Stützen sind zwar vergleichsweise kostengünstig in der Herstellung, die manuelle Bedienung ist in der Regel jedoch wenig komfortabel.

Aus der US-A-2837312 ist bereits eine Hubstütze gemäß der Gattung bekannt. Auch hier wird ein Hydraulikzylinder mit nach außen geführter Kolbenstange verwendet, der an einer Halterung befestigt ist, welche als Drehlager ausgebildet ist. Die Verwendung einer Schubstange, die außerhalb des Festlegungspunktes des Hydraulikzylinders an der Halterung drehbar befestigt ist, ist im unteren Bereich in einem Dreh-Schiebe-Lager festgelegt, der am freien Ende der Kolbenstange befestigte Teller wird gegen das untere Ende der Schubstange gepresst und hierdurch die Bewegung ausgelöst.

Vor diesem Hintergrund hat sich die Erfindung die Aufgabe gestellt, den vollständigen Kontakt zwischen dem Teller und den unteren Enden der Schubstange während des Ausklappvorgangs zu gewährleisten.

Erfindungsgemäß wird diese Aufgabe dadurch gelöst, daß eine Feder zwischen Schubstange und Halterung angeordnet ist.

Die Anbringung der Feder bewirkt, daß der Kontakt zwischen dem Teller und dem unteren Ende der Schubstange nicht nur durch das Gewicht des Zylinders sondern zusätzlich noch durch die au f die Schubstange wirkende Federkraft gewährleistet wird.

Die vorgeschlagene Hubstütze besteht aus einem Hydraulikzylinder, dessen oberes Ende ein vorzugsweise außeraxial gelegenes Drehlager aufweist, während an dessen unteren Ende die Kolbenstange ins Freie führt. Mit dem Drehlager ist der Zylinder an einer Halterung befestigt, die ihrerseits am Fahrzeugboden oder gleichwertigen Stellen montiert ist. Seitlich zum Zylinder sind eine, vorzugsweise zwei, Schubstangen angeordnet, deren oberes Ende jeweils schwenkbar an der Halterung befestigt ist, während deren unterer Bereich jeweils mittels eines Dreh-Schiebe-Lagers am Zylinder festgelegt ist. Dieses Lager läßt ein Gleiten der Schubstangen relativ zum Zylinder in Richtung von dessen Achse bei gleichzeitigem Verschwenken der Schubstangen um deren Festlegungspunkte an der Halterung zu. Das freie Ende der Kolbenstange weist einen Teller auf, dessen Radius wenigstens teilweise größer als der Abstand der Schubstange von der Zylinderachse ist, und der bei hydraulischer Beaufschlagung des Zylinders gegen das untere Ende der Schubstange gepreßt wird. Ein wesentliches konstruktives Merkmal der Stütze besteht darin, daß die Festlegungspunkte von Hydraulikzylinder und Schubstange an der Halterung von einander verschieden sind.

Beim Einfahren der Stütze wird der Kolben in den Zylinder eingefahren. Einem Kerngedanke vorliegender Erfindung entsprechend läuft bei diesem Vorgang der an der Kolbenstange angebrachte Teller gegen das untere Ende der Schubstangen und erzeugt dadurch in den Schubstangen eine Druckkraft, die in gleicher Größe und umgekehrter Richtung auf den Teller und damit den Zylinder wirkt. Da die Schubstangen und der Hydraulikzylinder an unterschiedlichen Punkten an der Halterung befestigt sind, ist die Wirkungslinie der letztgenannten Kraft gegenüber dem Drehpunkt des Zylinders versetzt. Hierdurch wird am Zylinder ein Drehmoment um die Horizontalachse erzeugt, welches die Stütze gegen das aus deren Gewicht resultierende Gegenmoment von der Vertikalen in die Horizontale verschwenkt.

Beim Ausklappen der Stütze wird umgekehrt der Kolben aus dem Zylinder ausgefahren. Dabei bleibt der an der Kolbenstange befestigte Teller in ständigem Kontakt mit den unteren Enden der Schubstangen. Der Kontakt wird dabei durch das Gewicht der Stütze und die zusätzlich zwischen Schubstangen und Halterung montierten Zugfedern erzwungen. Aufgrund der unterschiedlichen Festlegungspunkte von Hydraulikzylinder und Schubstangen an der Halterung entspricht dem wachsenden Abstand des Tellers vom unteren Ende des Zylinders jeweils eine zunehmende Verschwenkung des Zylinders aus der Horizontalen in die Vertikale.

Ein wesentlicher Vorteil der Stütze gemäß vorliegender Erfindung ist ihrem einfachen Aufbau zu sehen, der aus wenigen Einzelheiten besteht, und folglich nur wenige Verschleißteile aufweist und kostengünstig herzustellen ist. Trotz einfacher Bauart stellt die Stütze andererseits bei deren Bedienung den Komfort hydraulischer Arbeitsgeräte zur Verfügung. Darüber hinaus setzt die Stütze einfache Arbeitsabläufe um, so wird das Verschwenken der Stütze in Arbeits- oder Ruhestellung lediglich durch Ein- und Ausfahren eines Kolbens eines Hydraulikzylinders erzielt.

Eine andere Ausführungsform der Hubstütze ist dadurch gekennzeichnet, daß die Funktion von Kolben und Zylinder vertauscht sind und der Hydraulikzylinder dementsprechend um 180° gedreht gegenüber der vorbenannten Ausführungsform eingebaut ist. In diesem Fall ist das freie Ende der Kolbenstange mit einem Drehlager ausgestattet und an der Halterung befestigt , während das untere Ende des Zylinders einen Teller aufweist, der gegen das untere Ende der Schubstangen drückt. Funktionsweise, Merkmale und Vorteile dieser Ausführungsform entsprechen ansonsten denen der vorbenannten Ausführungsform.

Insbesondere in Verbindung mit einem weiteren Merkmal der Erfindung gestalten sich die Arbeitsabläufe bei vorliegender Hubstütze sehr zweckmäßig. Bei dieser Weiterbildung sind Anfang und/oder Ende des Schwenkbereichs des Zylinders jeweils durch einen Anschlag begrenzt, gegen den der Hydraulikzylinder in den genannten Positionen anläuft. Nach einem Merkmal der Erfindung ist dabei als Anfang des Schwenkbereichs vorzugsweise die vertikale Position des Hydraulikzylinders und als Ende des Schwenkbereichs die horizontale Position des Zylinders vorgesehen, wobei die Anfangsposition gleichzeitig die Arbeitsstellung, die Endposition die Ruhestellung des Zylinders ist.

Der Anschlag in Arbeitsstellung des Hydraulikzylinders besteht aus einem Widerlager, auf dem sich der Zylinder in der genannten Position abstützt. Wenn die Hubstütze aus ihrer Ruhestellung in die Arbeitsposition gefahren wird, bleibt der an der Kolbenstange befestigte Teller solange in ständigem Kontakt mit den unteren Enden der Schubstangen bis der Hydraulikzylinder gegen das Widerlager läuft. Zu diesem Zeitpunkt ist der Zylinder vorzugsweise in der Vertikalen ausgerichtet. Nach einem Merkmal der Erfindung ist

- der maximale Kolbenhub größer als die Differenz zwischen
- der in der Anfangsstellung des Zylinders gegebenen Entfernung zwischen unterem Ende der Schubstange und dem Drehlager des Zylinders
- und der in der Endstellung des Zylinders gegebenen Entfernung zwischen unterem Ende der Schubstange und dem Drehlager des Zylinders.

Hieraus folgt, daß der Kolben in der Arbeitsstellung des Zylinders weiter ausfahrbar ist als bis zu der Position, in welcher der Teller und die Schubstangen in Kontakt miteinander sind. Ein weiteres Ausfahren des Kolbens führt in diesem Fall jedoch nicht zu einem weiteren Verschwenken des Zylinders, da der Anschlag diese Bewegung verhindert, sondern zu einem weiteren Ausfahren des Tellers und damit einem Anheben des Fahrzeuges.

Die vorgeschlagene Konstruktion der Hubstütze ermöglicht damit nicht nur ein Verschwenken der Stütze mit hydraulischen Mitteln, sondern in vorteilhafter Weise auch ein Heben des Fahrzeugs durch ein und denselben Hydraulikzylinder. Als Vorteil ist es auch anzusehen , daß bei einer Beaufschlagung des Kolbens der Übergang von der Schwenkbewegung der Stütze in die Hubwegung zum Anheben des Fahrzeugs selbsttätig erfolgt, d.h. allein dadurch, daß der Hydraulikzylinder gegen den in Arbeitsposition vorgesehenen Anschlag anläuft.

Wenn die Stütze aus der Arbeitsposition in die Ruhestellung gefahren wird, kommt dieser Vorgang durch einen in Endstellung montierten Anschlag ebenfalls zum Stillstand. Im Unterschied zu dem vorbeschriebenen Vorgang bleibt hierbei jedoch der Teller in ständigem Kontakt mit den Enden der Schubstange. Wird in der Endposition der Hubstütze daher der Kolben weiter in den Zylinder eingefahren, wird der Teller um so fester gegen die Enden der Schubstangen gepreßt. Die vorteilhafte Folge hiervon ist, daß die Hubstütze in der Ruhestellung eine stabile, wackelfreie Position einnimmt.

Zur Vermeidung von Beschädigungen beim Einfahren der Stütze in die Ruheposition ist bei einer Weiterbildung der erfindungsgemäßen Stütze der genannte Anschlag mit einem hydraulischen oder elektrischen Schalter gekoppelt. Dieser Schalter unterbricht die Zufuhr des Hydrauliköls in den Zylinder bei Überschreiten eines Sollwertes der auf den Anschlag einwirkenden Kraft. Eine einfache Lösung des Sollwertgebers besteht in einem gefederten Anschlag, durch den nach Überschreiten eines vorgegebenen Federweges der Hydraulikschalter ausgelöst wird.

Wesentlich für die Erfindung ist auch der Winkel, welchen die Verbindungslinie der Festlegungspunkte von Hydraulikzylinder und Schubstange an der Halterung gegen die Vertikale einnimmt.

Bezeichnet man

- den Abstand der beiden Festlegungspunkte voneinander mit dem Symbol s,

- den Abstand des Schwerpunktes der Stütze vom Drehpunkt des Zylinders mit a,
- den Abstand des Festlegungspunkt der Feder an der Schubstange mit f
- das Gewicht der Stütze mit G,
- die auf den Kolben einwirkende hydraulische Kraft mit H,
- die zur Schubstange senkrechte Komponente der Federkraft mit F,

dann ist, wie der Fachmann leicht verifizieren kann,

das Drehmoment $M_H$, welches am Hydraulikzylinder aufgrund der Krafteinwirkung des Tellers auf die Schubstangen ausgelöst wird, gegeben durch die Formel:

$$M_H = H \times s \times \sin(\alpha + \beta)$$

das Drehmoment $M_G$, welches durch die Gewichtskraft am Hydraulikzylinder erzeugt wird, gegeben durch die Formel:

$$M_G = G \times a \times \sin \beta$$

das Drehmoment $M_F$, welches die Federkraft an den Schubstangen bzw. dem Hydraulikzylinder erzeugt, gegeben durch die Formel:

$$M_F = F \times f$$

wobei $\alpha$ der oben genannte Winkel ist, welchen die Verbindungslinie der Festlegungspunkte von Hydraulikzylinder und Schubstange an der Halterung gegen die Vertikale einnimmt

und $\beta$ den Verschwenkwinkel des Hydraulikzylinders gegen die Vertikale darstellt.

In einer beliebig geneigten Position der Hubstütze gilt für die am Zylinder angreifenden Momente:

$$M_H = M_G + M_F$$

bzw.

$$H \times s \times \sin(\alpha + \beta) = G \times a \times \sin \beta + F \times f$$

Hieraus folgt für die Größe der hydraulischen Kraft die Beziehung:

$$H = (F \times f + G \times a \times \sin \beta) / (s \times \sin(\alpha + \beta))$$

Nimmt man für eine Näherungsbetrachtung an, daß die Federkraft entfällt, dann folgt aus dieser Gleichung, daß für einen Winkel $\alpha$ zwischen der Verbindungslinie der Festlegungspunkte und der Vertikalen von 0 Grad die Größe der aufzubringenden Hydraulikkraft unabhängig von der Verschwenkposition $\beta$ der Stütze wird. In diesem speziellen Fall, bei dem beide Festlegungspunkte in der Vertikalen übereinander liegen, ist die Hydraulikkraft gegeben durch

$$H = (G \times a) / s$$

d. h. durch die Gewichtskraft multipliziert mit dem Verhältnis der beiden Strecken a/s.

Für die Dimensionierung der Hubstütze wäre dieser Fall einer von der Verschwenkposition der Stütze unabhängigen Hydraulikkraft ideal. Einer Umsetzung dieser Geometrie in die Praxis steht jedoch entgegen, daß bei der genannten Anordnung der beiden Festlegungspunkte in der Vertikalen ($\alpha = 0$), sich die Hubstütze mit einer noch so großen Hydraulikkraft H nicht aus ihrer Anfangsstellung (Verschwenkwinkel $\beta = 0$) heraus bewegen läßt. Bei der zugrunde gelegten Näherungsbetrachtung äußert sich dieser Sachverhalt in der Formel für H dadurch, daß bei $\alpha = 0$ und $\beta = 0$ der Wert für H unbestimmt ist.

Aus den obigen Betrachtungen folgt, daß für den Winkel $\alpha$, welchen die Verbindungslinie der Festlegungspunkte von Hydraulikzylinder und Schubstange an der Halterung gegen die Vertikale einnimmt, ein Wert größer 0 Grad erforderlich ist. Als oberer Grenzwert für den Winkel $\alpha$ wird ein Wert kleiner als 30 Grad empfohlen. Nach einem Merkmal der Erfindung werden bei den bevorzugten Ausführungsformen der Hubstütze diese Werte umgesetzt. Bei dieser Ausgestaltung erweist sich die Hydraulikkraft zwar als abhängig vom Verschwenkwinkel der Stütze, ihr Maximalwert in der Ruhestellung der Stütze liegt aber nur geringfügig über dem Wert des genannten Spezialfalls.

Weitere Einzelheiten, Merkmale und Vorteile der Erfindung lassen sich dem nachfolgenden Teil der Beschreibung entnehmen. In diesem Teil wird eine Hubstütze gemäß vorliegender Erfindung anhand einer Zeichnung näher erläutert. Die wiedergegebenen Figuren zeigen in schematischer Darstellung

Figur 1:     eine Hubstütze in einer beliebigen Verschwenkstellung
Figur 2:     eine Hubstütze in Arbeitsstellung

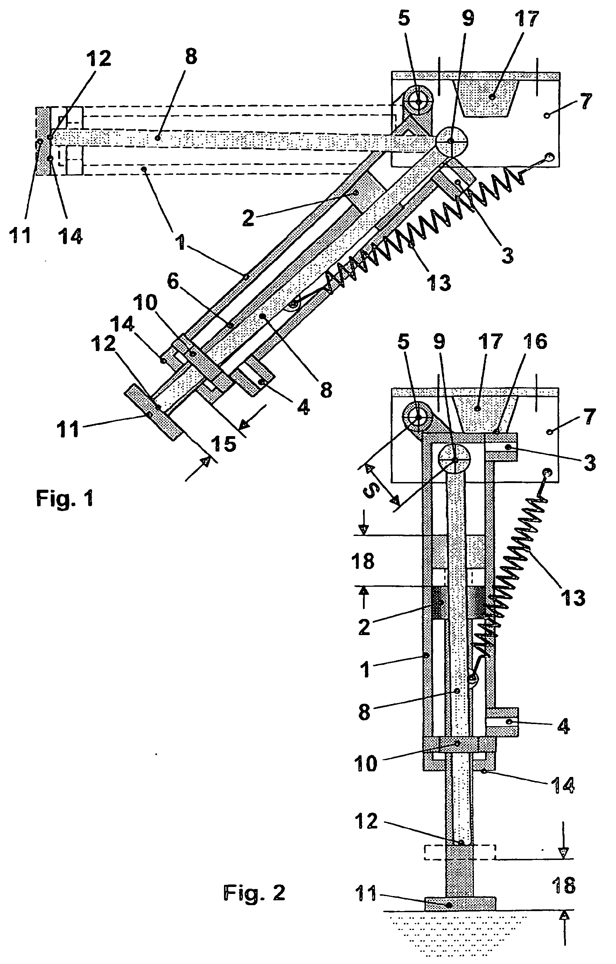

Figur 1 läßt den prinzipiellen Aufbau der Hubstütze erkennen. Sie besteht aus einem Zylinder 1 mit zweiseitig beaufschlagbarem Kolben 2, wobei die hydraulische Beaufschlagung der Kolbenvorderseite über den Anschluß 3, die der Rückseite über den Anschluß 4 erfolgt. Der Zylinder weist an seinem oberen Ende ein außeraxial gelegenes Schwenklager 5 auf, während an dessen unteren Ende die Kolbenstange 6 ins Freie geführt ist. Mittels des Schwenklagers 5 ist der Zylinder 1 an einer Halterung 7 befestigt, die üblicherweise am Fahrzeugboden angebracht ist. Seitlich zum Zylinder sind zwei Schubstangen 8 vorgesehen, von denen die eine in der Darstellung sichtbar ist, während die zweite unterhalb der Zeichenebene liegt und durch die dargestellte Stütze verdeckt wird. Die oberen Enden der Schubstangen 8 weisen ebenfalls jeweils ein Schwenklager 9 auf, die an der Halterung 7 befestigt sind und gegenüber dem Schwenklager 5 des Zylinders um die Strecke S beabstandet sind. In ihrem unteren Bereich sind die Schubstangen jeweils mittels eines Dreh-Schiebe-Lagers 10 am Zylinder festgelegt. Im vorliegenden Fall ist dieses Lager als Lasche ausgebildet, die am Zylinder befestigt ist, und den Schubstangen 8 ein Gleiten in Richtung der Zylinderachse und ein gleichzeitiges (geringfügiges) Verschwenken um deren Festlegungspunkte 9 an der Halterung ermöglicht. Das freie Ende der Kolbenstange 6 weist einen Teller 11 auf, der in Kontakt mit dem unteren Ende 12 der Schubstange 8 ist.

Der dargestellte Bewegungsaugenblick zeigt die Stütze beim Hochfahren. In diesem Fall wird der Kolben 2 in den Zylinder eingefahren und dabei der Teller 11 gegen das untere Ende 12 der Schubstangen 8 gepreßt. Aufgrund der unterschiedlichen Festlegungspunkte 5 bzw. 9 von Schubstangen und Zylinder an der Halterung wird hierdurch am Zylinder 1 ein Drehmoment um die Horizontalachse erzeugt, welches die Hubstütze gegen die Kraft der Feder 13 und das aus dem Gewicht der Hubstütze resultierende Moment noch oben verschwenkt.

Die durch die horizontale Lage der Hubstütze gegebene Ruhestellung ist durch gestrichelte Linien angedeutet. In dieser Position ist der Kolben 2 der dargestellten Ausführungsform der Hubstütze soweit in den Zylinder 1 eingefahren, daß der Teller 11 gegen den Zylinderboden 14 anläuft. Die unteren Enden 12 der Schubstangen 8 schließen in diesem Fall ebenfalls mit dem Zylinderboden 14 ab.

Beim Ausklappen der Stütze wird umgekehrt der Kolben 2 aus dem Zylinder 1 ausgefahren. Bei diesem Vorgang nimmt der Abstand 15 des Tellers 11 von dem Zylinderboden 14 kontinuierlich zu, wobei der Teller 11 und die unteren Enden 12 der Schubstangen 8 in permanentem Kontakt bleiben. Der Kontakt wird das Gewicht der Hubstütze und die zusätzlich zwischen Schubstangen 8 und Halterung 7 montierten Zugfedern 13 erzwungen. Wenn die Hubstütze die vertikale Position erreicht, läuft die Zylinderoberseite 16 gegen ein Widerlager 17. Wird in dieser Position des Zylinders der Kolben 2 weiter ausgefahren, kommt es zu keinem weiteren Verschwenken des Zylinders mehr, sondern der Teller 11 entfernt sich vom unteren Ende 12 der Schubstangen 8 und bewirkt hierdurch einem Anheben des Fahrzeuges. Für vorliegender Figur wurde angenommen, daß das Fahrzeug um die Strecke 18 angehoben wurde.

Die vorgeschlagene Konstruktion der Hubstütze ermöglicht somit sowohl ein Verschwenken der Stütze mit hydraulischen Mitteln als auch ein Heben des Fahrzeugs durch ein und denselben Hydraulikzylinder.

**Patentansprüche**

1.   Hubstütze mit einem Hydraulikzylinder mit beidseitig beaufschlagbarem Kolben, einer aus dem Zylinder herausführenden Kolbenstange, einer Halterung wobei

- der Hydraulikzylinder (1)

    - an seinem oberen Ende ein vorzugsweise außeraxial gelegenes Drehlager (5) aufweist
    - und am Drehlager (5) schwenkbar an der Halterung (7) befestigt ist

- wenigstens eine Schubstange (8) vorgesehen ist,

    - deren oberes Ende schwenkbar (9) an der Halterung (7) befestigt ist,
    - deren unterer Bereich in einem am Zylinder (1) befestigten Dreh-Schiebe-Lager (10) festgelegt ist,

- und die Festlegungspunkte (5, 9) von Hydraulikzylinder (1) und - Schubstange (8) an der Halterung (7) von einander verschieden sind,
- und das freie Ende der Kolbenstange (6) einen Teller (11) aufweist, der gegen das untere Ende (12) der Schubstange (8) preßbar ist,

**dadurch gekennzeichnet, daß** eine Feder (13) zwischen Schubstange (8) und Halterung (7) angeordnet ist.

2. Hubstütze mit einem Hydraulikzylinder mit beidseitig beaufschlagbarem Kolben, einer aus dem Zylinder herausführenden Kolbenstange, einer Halterung und wenigstens einer Zugfeder, wobei

- wenigstens eine Schubstange vorgesehen ist,

    - deren oberes Ende schwenkbar an der Halterung befestigt ist,
    - und deren unterer Bereich in einem am Zylinder befestigten Dreh-Schiebe-Lager festgelegt ist,

wobei

    - die Kolbenstange

        - an ihrem freien Ende ein vorzugsweise außeraxial gelegenes Drehlager aufweist

- und am Drehlager schwenkbar an der Halterung befestigt ist,
- die Festiegungspunkte von Kolbenstange und Schubstange an der Halterung von einander verschieden sind,
- und das untere Ende des Zylinders einen Teller aufweist, der gegen das untere Ende der Schubstange preßbar ist,
- und die Feder zwischen Schubstange und Halterung angeordnet ist.

3. Hubstütze nach Anspruch 1, **dadurch gekennzeichnet, daß**

- der Anfang und/oder das Ende des Schwenkbereichs des Zylinders (1) jeweils durch einen Anschlag (17) begrenzt ist,
- und die Anfangsstellung des Zylinders vorzugsweise in vertikaler Richtung,
- die Endstellung des Zylinders vorzugsweise in horizontaler Richtung liegt.

4. Hubstütze nach Anspruch 1, **dadurch gekennzeichnet, daß**

- der maximale Kolbenhub größer ist als die Differenz zwischen

    - der in der Anfangsstellung des Zylinders (1) gegebenen Entfernung zwischen unterem Ende (12) der Schubstange (8) und genanntem Drehlager (5)
    - und der in der Endstellung des Zylinders (1) gegebenen Entfernung zwischen unterem Ende (12) der Schubstange (8) und genanntem Drehlager (5).

5. Hubstütze nach Anspruch 1, **dadurch gekennzeichnet, daß** der Anschlag am Ende des Schwenkbereichs mit einem hydraulischen oder elektrischen Schalter gekoppelt ist.

6. Hubstütze nach Anspruch 1, **dadurch gekennzeichnet, daß** die Linie durch beide Festlegungspunkte (5, 9) mit der Vertikalen einen. Winkel größer 0 und vorzugsweise kleiner 30 Grad einschließt.

**Claims**

1. Lifting jack comprising a hydraulic cylinder having pistons that can be pressurised from both sides, a piston rod leading out of the cylinder, a mounting,

   - the hydraulic cylinder (1)

      - having, at its upper end, a preferably extra-axially positioned pivot bearing (5)
      - and being fastened on the mounting (7) so as to be pivotable on the pivot bearing (5)

   - at least one connecting rod (8) being provided,

      - of which the upper end is fastened pivotably (9) on the mounting (7),
      - of which the lower region is fixed in a pivoting sliding bearing (10) on the cylinder (1),

   - and the fixing points (5, 9) of the hydraulic cylinder (1) and connecting rod (8) on the mounting (7) being different from one another,
   - and the free end of the piston rod (6) having a plate (11), which can be pressed against the lower end (12) of the connecting rod (8),

   **characteised in that** a spring (13) is arranged between the connecting rod (8) and mounting (7).

2. Lifting jack comprising a hydraulic cylinder having pistons that can be pressurised from both sides, a piston rod leading out of the cylinder, a mounting, and at least one tensioning spring

   - at least one connecting rod being provided,

      - of which the upper end is fastened pivotably on the mounting,
      - and of which the lower region is fixed in a pivoting sliding bearing fixed on the cylinder,

   - the piston rod

      - having at its free end a preferably extra-axially located pivot bearing

   - and being fixed so as to be pivotable on the mounting,
   - the fixing points of the piston rod and connecting rod on the mounting being different from one another,
   - and the lower end of the cylinder having a plate, which can be pressed against the lower end of the connecting rod,
   - and the spring being arranged between the connecting rod and mounting.

3. Lifting jack according to claim 1, **characterised in that**

   - the beginning and/or the end of the pivot region of the cylinder (1) is in each case limited by means of a stop (17),
   - and the starting position of the cylinder preferably lies in a vertical direction,
   - and the end position of the cylinder preferably lies in a horizontal direction.

4. Lifting jack according to claim 1, **characterised in that**

   - the maximum piston stroke is greater than the difference between

      - the distance between the lower end (12) of the connecting rod (8) and the aforesaid pivot bearing (5) when the cylinder (1) is in the starting position
      - and the distance between the lower end (12) of the connecting rod (8) and the aforesaid pivot bearing (5), when the cylinder (1) is in the end position.

5. Lifting jack according to claim 1, **characterised in that** the stop at the end of the pivot range is coupled to a hydraulic or electric switch.

6. Lifting jack according to claim 1, **characterised in that** the line through two fixing points (5, 9) encloses an angle that is greater than 0 degrees and preferably less than 30 degrees with respect to the vertical.

**Revendications**

1. Bras de levage avec un vérin hydraulique avec un piston pouvant être injecté des deux côtés, une tige de piston conduisant hors du vérin, un support, sachant que

   • le vérin hydraulique (1)
   • présente un palier pivotant (5) positionné de préférence en-dehors de l'axe
   • et est fixé au palier pivotant (5) de façon à pouvoir pivoter sur le support (7)
   • au moins une biellette (8) est prévue
   • dont l'extrémité supérieure (9) est fixée au support (7) de façon à pouvoir pivoter,
   • dont la partie inférieure est tenue par un palier pivotant et coulissant (10) fixé sur le vérin (1),
   • les points de fixation (5, 9), du vérin hydraulique (1) et de la biellette (8) sur le support (7) étant différents les uns des autres,
   • et l'extrémité libre de la tige du piston (6) présente un disque (11) qui peut être pressé contre l'extrémité inférieure (12) de la biellette (8),

   **caractérisé par le fait qu'**un ressort (13) est disposé entre la biellette (8) et le support (7).

2. Bras de levage avec un vérin hydraulique avec un piston pouvant être injecté des deux côtés, une tige de piston conduisant hors du vérin, un support et au moins un ressort de traction, sachant que

   • au moins une biellette est prévue,
   • dont l'extrémité supérieure est fixée sur le support de façon à pouvoir pivoter,
   • et dont la partie inférieure est fixée à un palier pivotant et coulissant fixé sur le vérin,

   tandis que

   • la tige de piston
   • présente à son extrémité libre un palier pivotant positionné de préférence en-dehors de l'axe
   • et est fixée au palier pivotant de façon à pouvoir pivoter sur le support,
   • les points de fixation de la tige de piston et de la biellette sur le support sont différents les uns des autres,
   • et l'extrémité inférieure du vérin présente un disque qui peut être pressé contre l'extrémité inférieure de la biellette,
   • et le ressort est disposé entre la biellette et le support.

3. Bras de levage conforme à la revendication 1, **caractérisé par le fait que**

   • le début et/ou la fin de la zone de pivotement du vérin (1)
   • est limité à chaque fois par une butée (17),
   • et que la position de départ du vérin se trouve de préférence en direction verticale,
   • et la position finale du vérin en direction horizontale.

4. Bras de levage conforme à la revendication 1, **caractérisé par le fait que**

   • la course maximale du piston est plus grande que la différence entre
   • la distance donnée dans la position de départ du vérin (1) entre l'extrémité inférieure (12) de la biellette (8) et du palier pivotant cité (5)
   • et la distance donnée dans la position finale du vérin (1) entre l'extrémité inférieure (12) de la biellette (8) et le palier pivotant cité (5).

5. Bras de levage conforme à la revendication 1, **caractérisé par le fait que** la butée à la fin de la zone de pivotement est couplée à un interrupteur hydraulique ou électrique.

6. Bras de levage conforme à la revendication 1, **caractérisé par le fait que** la ligne entre les deux points de fixation (5, 9) forme un angle supérieur à zéro et de préférence inférieure à 30 degrés avec la verticale.

EP 1 238 875 B1

Fig. 1

Fig. 2

10